# EUROPÄISCHE PATENTANMELDUNG

(11) **EP 3 723 187 A1**
(43) Veröffentlichungstag der Anmeldung: **14.10.2020**
(21) Anmeldenummer: 20169107.8
(22) Anmeldetag: 09.04.2020
(51) Int. Cl.: H01M 10/613, H01M 10/647, H01M 10/625, H01M 10/6553, H01M 10/6555, H01M 2/02, H01M 2/10, H01M 10/6557, H01M 10/6556, H01M 10/6568, H01M 10/653, H01M 10/04

(54) **KÜHLELEMENT, VORRICHTUNG UND VERFAHREN ZUM KÜHLEN VON BATTERIEZELLEN, INSBESONDERE FÜR POUCH-ZELLEN, SOWIE BATTERIEPACK**

(30) Priorität: 12.04.2019 DE 102019109812
(71) Anmelder: Airbus Defence and Space GmbH, 82024 Taufkirchen (DE)
(72) Erfinder: Kaindl, Philipp, 82024 Taufkirchen (DE)
(74) Vertreter: KASTEL Patentanwälte PartG mbB

(57) **Zusammenfassung**

Ein Kühlelement (10) für Batteriezellen, insbesondere für Pouch-Zellen, umfasst einen Kühlkörper (11) zur thermischen Kontaktierung einer Hauptfläche (53a) einer Batteriezelle (50), um Wärme von der Batteriezelle (50) aufzunehmen, sowie eine Kühlmittelleitung (12) für ein Kühlmittel, um Wärme von dem Kühlkörper (11) aufzunehmen und abzuleiten. Die Kühlmittelleitung (12) ist derart gestaltet, dass sie zum Kühlen der Batteriezelle (50) deren elektrische Anschlusselemente (51, 52) thermisch kontaktiert. Durch Anfügen eines weiteren Kühlelements (10) wird eine Aufnahme für die Batteriezelle (50) gebildet, um diese von zwei Seiten an ihren Hauptflächen (53a) und ihren elektrischen Anschlusselementen (51, 52) thermisch zu kontaktieren. Eine Kühlvorrichtung für Batteriezellen (50) umfasst eine Vielzahl von nebeneinander angeordneten Kühlelementen (10). Ein Batteriepack umfasst eine Vielzahl von Batteriezellen (50), die sich in der Kühlvorrichtung befinden.

## Beschreibung

Die Erfindung betrifft ein Kühlelement für Batteriezellen, eine Vorrichtung zum Kühlen von Batteriezellen, ein Verfahren zum Kühlen von Batteriezellen, sowie ein Batteriepack. Insbesondere sollen damit Pouch-Zellen gekühlt werden.

Batteriezellen bzw. Akkumulatoren werden in den verschiedensten Bereichen der Technik als wiederaufladbare Speicher für elektrische Energie eingesetzt. Beispielsweise werden in elektrisch betriebenen Fahrzeugen und in Hybridelektrofahrzeugen Batteriemodule eingesetzt, die eine Vielzahl von Batteriezellen aufweisen. Dabei können die Batteriezellen sowohl parallel als auch in Reihe geschaltet sein. In vielen Anwendungen, beispielsweise zur Bildung einer Traktionsbatterie, werden mehrere Batteriemodule in Reihe oder parallel geschaltet.

Auch im Bereich der Luftfahrt besteht ein zunehmender Bedarf an leitungsfähigen Batterien und Batteriesystemen mit einer Vielzahl von Batteriezellen, die eine hohe Kapazität bei möglichst geringem Gewicht aufweisen.

Ein Problem bei derartigen Batterien und Batteriemodulen ist die große Wärmeentwicklung, welche das Leistungsvermögen und die Lebensdauer der Batterie herabsetzt. Daher ist es in vielen Anwendungsfällen notwendig, die Batterien aktiv zu kühlen. Insbesondere Batteriezellen in Form von Pouch-Zellen, die auch als Battery Pouch Cells bezeichnet werden, bieten eine große Leistungsdichte in Bezug auf das Gewicht, jedoch haben sie Nachteile was die Wärmeverteilung über bzw. innerhalb der Zelle betrifft. Dadurch wird zum Beispiel das Stapeln derartiger Batteriezellen erschwert. Darüber hinaus besteht die Gefahr, dass sie bei erhöhten Temperaturen anschwellen, was die Lebensdauer drastisch reduziert. Aus diesen Gründen müssen insbesondere Batteriestapel bzw. Battery Stacks aktiv gekühlt werden.

Dabei besteht das Problem, bei hoher Stapeldichte eine starke Kühlung der Batteriezellen zu erreichen. Auch muss ein Anschwellen der Batteriezellen vermieden werden.

Zur Kühlung von Batteriestapeln werden im Stand der Technik beispielsweise Kühlplatten verwendet, bei denen ein Kühlmittel an der Oberfläche zirkuliert, oder es werden Hitzeverteiler thermisch mit einer Kühlplatte verbunden.

Die Druckschrift DE 10 2014 215 677 A1 beschreibt ein Batteriesystem für ein Kraftfahrzeug, bei dem mehrere Batteriezellen innerhalb eines Gehäuses angeordnet sind, wobei ein flüssiges Kühlmittel die Wärmeenergie der Batteriezellen aufnimmt und an einen Kühlkörper übertragt. Der Kühlkörper erstreckt sich an einer Seite des Gehäuses von dessen Innenseite zu dessen Außenseite.

EP 2 945 219 B1 offenbart eine Vorrichtung zum Erwärmen und Kühlen eines Batteriepacks zum Antrieb von Fahrzeugen, der eine Mehrheit von Batteriezellen umfasst. Eine plattenartige Kühlkomponente ist von Kanälen durchzogen, durch die ein Kühlfluid strömt. Die Kühlkomponente liegt an einer Seite des Batteriepacks an und wird mittels einer Vorspanneinheit vorgespannt gegen den Batteriepack gedrückt.

DE 10 2007 063 187 B3 beschreibt eine Batterie für hybridgetriebene Kraftfahrzeuge, die mehrere Zellen aufweist, die auf einer Kühlplatte angeordnet sind.

Der Artikel "Surface cooling causes accelerated degradation compared to tab cooling for lithium-ion pouch cells", Ian A. Hunt et al., Journal of the Electrochemical Society, 163 (9) A1846 - A1852 (2016) befasst sich mit der Verschlechterung des Zustands von Lithium-Ionen-Batterien durch Temperaturerhöhung. Es wird beschrieben, dass unter Laborbedingungen die Kühlung des Anschlusses einer Pouch-Zelle im Vergleich zur Kühlung der Batteriezellenoberfläche aufgrund des Verlaufs des thermischen Gradienten positive Auswirkungen auf die Lebensdauer der Batteriezelle hat.

Die Erfindung hat sich zur Aufgabe gestellt, eine möglichst große Zahl von Batteriezellen, insbesondere Pouch-Zellen, auf möglichst engem Raum zu stapeln und dabei eine effektive Kühlung der Batteriezellen zu gewährleisten.

Zum Lösen dieser Aufgabe schafft die Erfindung ein Kühlelement für Batteriezellen, umfassend einen Kühlkörper zur thermischen Kontaktierung einer Hauptfläche einer Batteriezelle, um Wärme von der Batteriezelle aufzunehmen, und eine Kühlmittelleitung für ein Kühlmittel, um Wärme von dem Kühlkörper aufzunehmen und abzuleiten, wobei die Kühlmittelleitung derart gestaltet ist, dass sie zum Kühlen der Batteriezelle deren elektrische Anschlusselemente thermisch kontaktiert, und wobei das Kühlelement derart gestaltet ist, dass sich durch Anfügen eines weiteren Kühlelements eine Aufnahme für die Batteriezelle bildet, um diese von zwei Seiten an ihren Hauptflächen und ihren elektrischen Anschlusselementen thermisch zu kontaktieren.

Bevorzugt ist der Kühlkörper als Kühlplatte ausgestaltet. Er kann zum Beispiel eine rechteckige Form aufweisen.

Insbesondere umfasst der Kühlkörper an beiden Seiten eine Kühlfläche zur thermischen Kontaktierung der Hauptflächen jeweils angrenzender Batteriezellen.

Vorteilhaft ist die Kühlmittelleitung zumindest in einem Abschnitt an einem Rand des Kühlkörpers angeordnet. Beispielsweise umgibt die Kühlmittelleitung den Kühlkörper oder einen Bereich des Kühlkörpers von mindestens drei Seiten.

Insbesondere umfasst die Kühlmittelleitung an beiden Seiten Flächen zur thermischen Kontaktierung der elektrischen Anschlusselemente jeweils angrenzender Batteriezellen.

Beispielsweise ist die Kühlmittelleitung an einem Ende des Kühlelements abgeflacht, um das Einschieben von Batteriezellen zwischen zwei nebeneinander angeordneten Kühlelementen zu ermöglichen.

Bevorzugt ist das Kühlelement mittels additiver Fertigung hergestellt.

Gemäß einem Aspekt schafft die Erfindung eine Vorrichtung zum Kühlen von Batteriezellen, die mindestens zwei erfindungsgemäße Kühlelemente umfasst, wobei die Kühlelemente seitlich nebeneinander angeordnet sind, um Batteriezellen zwischen sich aufzunehmen und von beiden Seiten an deren Hauptflächen und elektrischen Anschlusselementen flächig zu kontaktieren.

Bevorzugt sind die Kühlmittelleitungen derart angeordnet, dass sie die Anschlusselemente aufgenommener Batteriezellen flächig an zwei sich gegenüber liegenden Seiten thermisch kontaktieren.

Vorteilhaft sind die Kühlkörper derart angeordnet, dass sie die Hauptflächen aufgenommener Batteriezellen flächig an zwei sich gegenüber liegenden Seiten thermisch kontaktieren.

Insbesondere können eine Vielzahl von Kühlelementen parallel zueinander angeordnet sein, um eine Vielzahl von Batteriezellen zwischen den Kühlelementen aufzunehmen.

Beispielsweise sind die Kühlelemente derart gestaltet, dass zwischen jeweils zwei Kühlelementen mehrere Batteriezellen nacheinander angeordnet werden können.

Vorteilhaft umfasst die Vorrichtung eine Einrichtung zum Aneinanderdrücken der Kühlelemente.

Insbesondere ist die Vorrichtung mittels additiver Fertigung hergestellt.

Bevorzugt umfasst die Vorrichtung eine Einrichtung zum Pumpen eines Kühlmittels durch die Kühlmittelleitungen.

Gemäß einem anderen Aspekt der Erfindung wird ein Batteriepack geschaffen, das eine erfindungsgemäße Vorrichtung umfasst, in der eine Vielzahl von Batterien angeordnet sind.

Gemäß einem weiteren Aspekt der Erfindung wird ein Verfahren zum Kühlen von Batteriezellen geschaffen, bei dem ein Kühlkörper an einer Hauptfläche einer Batteriezelle angeordnet wird, um die Hauptfläche zu kühlen, und mit Hilfe eines Kühlmittels Wärme von dem Kühlkörper aufgenommen und abgeführt wird, wobei das Kühlmittel in einer Kühlmittelleitung geführt wird, die elektrische Anschlusselemente der Batteriezelle thermisch kontaktiert und Wärme von den Anschlusselementen aufnimmt und mit Hilfe des Kühlmittels abführt.

Bevorzugt sind eine oder mehrere Batteriezellen zwischen jeweils zwei Kühlkörpern angeordnet, welche der jeweiligen Batteriezelle von beiden Seiten durch thermischen Kontakt Wärme entziehen, wobei den elektrischen Anschlusselementen der Batteriezelle von beiden Seiten durch thermischen Kontakt mit der Kühlmittelleitung Wärme entzogen wird,

Vorteilhaft werden die Kühlkörper gegen einander gedrückt, um Druck auf die dazwischen liegenden Batteriezellen auszuüben.

Insbesondere wird das Verfahren mit einem erfindungsgemäßen Kühlelement und/oder mit einer erfindungsgemäßen Vorrichtung durchgeführt.

Ein Ausführungsbeispiel wird im Folgenden anhand der beigefügten Zeichnungen näher erläutert. Darin zeigt:
- Fig. 1: ein Kühlelement für Batteriezellen in einer perspektivischen Ansicht schräg von oben auf eine Seite des Kühlelements;
- Fig. 2: ein Beispiel für eine bekannte Batteriezelle in Form einer Pouch-Zelle, die durch das erfindungsgemäße Kühlelement gekühlt wird;
- Fig. 3: zwei aneinander gereihte erfindungsgemäße Kühlelemente als ein Beispiel einer erfindungsgemäßen Kühlvorrichtung, in einer perspektivischen Ansicht schräg von oben auf die Rückseite und auf eine Seite der Vorrichtung;
- Fig. 4: ein weiteres Beispiel für eine erfindungsgemäße Vorrichtung zum Kühlen von Batteriezellen als perspektivische Ansicht schräg von oben auf die Vorderseite und auf eine Seite der Vorrichtung;
- Fig. 5: eine Vorderansicht der in Fig. 4 dargestellten erfindungsgemäßen Vorrichtung;
- Fig. 6: eine perspektivische Ansicht schräg von oben auf die Rückseite der in den Fig. 4 und 5 dargestellten erfindungsgemäßen Vorrichtung; und
- Fig. 7: eine Anordnung von Batteriezellen, wie sie in der erfindungsgemäßen Vorrichtung gemäß Fig. 6 gekühlt wird.

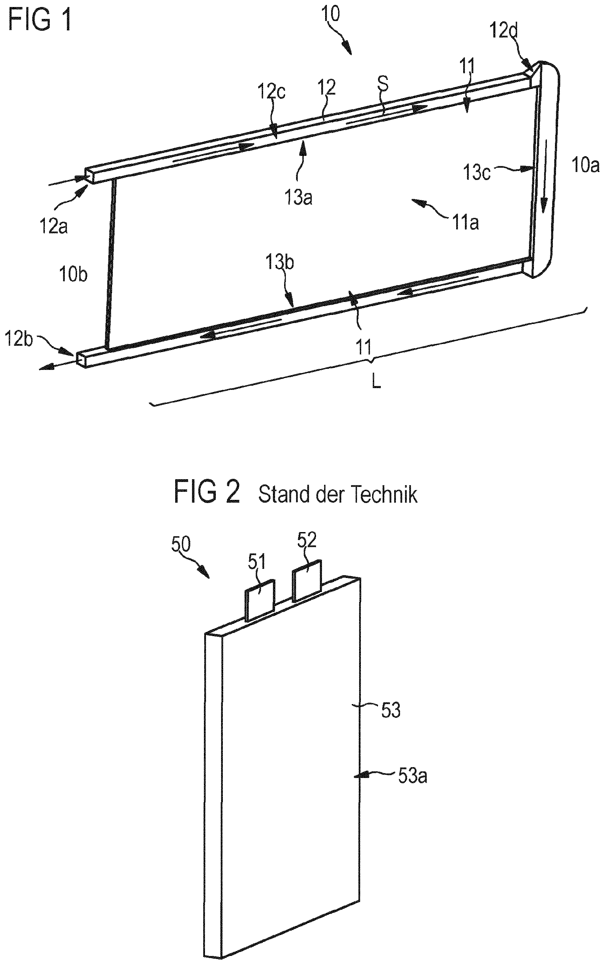

In Fig. 1 ist ein Kühlelement 10 gezeigt, dass eine bevorzugte Ausführungsform der Erfindung darstellt. Das Kühlelement 10 dient zur Kühlung von einer oder mehreren Batteriezellen.

Fig. 2 zeigt als ein Beispiel für derartige zu kühlende Batteriezellen eine Batteriezelle 50 mit ihren elektrischen Anschlusselementen 51, 52 in Form von Battery Tabs, die als flach ausgebildete Anschlussfahnen oder -laschen ausgestaltet sind. Die Anschlusselemente 51, 52 sind an der Oberseite eines Batteriekörpers 53 der Batteriezelle 50 angeordnet, der im Wesentlichen die Form eines flach ausgebildeten Quaders hat. An der Vorderseite des Batteriekörpers 53 und auch an dessen Rückseite (in der Figur nicht sichtbar) befindet sich jeweils eine Hauptfläche 53a. Die beiden Hauptflächen 53a sind somit Seitenflächen eines flach ausgebildeten Quaders, das heißt eines Quaders mit relativ geringer Dicke, der den Batteriekörper 53 der Batteriezelle 50 bildet.

Wie in Fig. 1 dargestellt, hat das Kühlelement 10 einen Kühlkörper 11, der zur thermischen Kontaktierung einer der Hauptflächen 53a der Batteriezelle 50 (siehe Fig. 2) dient, um die von der Batteriezelle 50 erzeugte Wärme aufzunehmen. Der Kühlkörper 11 ist plattenförmig und bildet eine rechteckige Kühlplatte, die als Hitze- bzw. Wärmeverteiler dient.

An beiden Seiten des Kühlkörpers 11 befinden sich dessen Hauptflächen 11a, die jeweils als eine Kühlfläche zur thermischen Kontaktierung und Kühlung einer der Hauptflächen 53a der Batteriezelle 50 (siehe Fig. 2) dient.

Das Kühlelement 10 hat weiterhin eine Kühlmittelleitung 12, die an drei Kanten des Kühlkörpers 11 angeordnet ist, nämlich an seiner oberen Kante 13a, seiner unteren Kante 13b und an seiner vorderen Kante 13c. Die Kühlmittelleitung 12 bildet einen Kanal für ein Kühlmittel, das die Kühlmittelleitung 12 in der Fließrichtung S durchströmt, um Wärme von dem Kühlkörper 11 aufzunehmen und abzuleiten.

Hierzu befindet sich an der Rückseite 10b des Kühlelements 10 eine Öffnung 12a zur Aufnahme des Kühlmittels und eine Öffnung 12b zur Abgabe des Kühlmittels, nachdem es innerhalb der Kühlmittelleitung 12 den Kühlkörper 11 an seinen drei Seiten bzw. Kanten 13a, 13c und 13b umströmt hat.

Die Kühlmittelleitung 12 ist so gestaltet, dass sie die elektrischen Anschlusselemente 51, 52 der in Fig. 2 gezeigten Batteriezelle 50 thermisch kontaktiert, wenn die Batteriezelle 50 an dem Kühlelement 10 anliegt um gekühlt zu werden.

Das Kühlelement 11 ist so ausgestaltet, dass sich durch Anfügen eines weiteren Kühlelements 11 eine Aufnahme für die in Figur 2 gezeigte Batteriezelle 50 bildet, bei der die Batteriezelle 50 von zwei Seiten an ihren Seiten- bzw. Hauptflächen 53a und an ihren elektrischen Anschlusselementen 51, 52 thermisch kontaktiert wird, wenn sich die Batteriezelle 50 in der Aufnahme zwischen den beiden Kühlelementen 10 befindet.

Um den thermischen Kontakt zwischen der Kühlmittelleitung 12 und den elektrischen Anschlusselementen 51, 52 der Batteriezelle 50 zu gewährleisten, während die Hauptfläche 53a der Batteriezelle 50 die Kühlfläche 11a des Kühlkörpers 11 thermisch kontaktiert, ist die Kühlmittelleitung 12 breiter als die Dicke des Kühlkörpers 11.

Je nach der Form und Ausgestaltung der aufzunehmenden und zu kühlenden Batteriezelle kann die Geometrie des Kühlelements 10 mit seinem Kühlkörper 11 und seiner Kühlmittelleitung 12 auch anders ausgestaltet sein, um die thermische Kontaktierung der Batteriezelle 50 sowohl an deren Hauptflächen 53a als auch an deren elektrischen Anschlusselementen 51, 52 zu gewährleisten, wenn sie an dem Kühlelement 10 anliegt bzw. sich zwischen zwei Kühlelementen 10 befindet.

Unter thermischer Kontaktierung wird insbesondere verstanden, dass die Oberflächen der jeweiligen Elemente so aneinandergrenzen oder sich so kontaktieren, dass ein möglichst guter Wärmefluss stattfinden kann. Dabei können aber auch noch andere Funktionsschichten auf den Oberflächen ausgebildet sein, wie zum Beispiel eine Isolationsschicht zur elektrischen Isolierung der Kühlmittelleitung gegenüber den angrenzenden Kontaktelementen 51, 52.

Zur thermischen Kontaktierung der Anschlusselemente 51, 52 der Batteriezelle 53 weist die Kühlmittelleitung 12 an ihren beiden Seiten jeweils eine Seitenfläche 12c auf, die eine Kühlfläche bildet. Dadurch können auf beiden Seiten des Kühlelements 10 Batteriezellen 53 angeordnet und an ihren Anschlusselementen 51, 52 gekühlt werden.

Die Kühlmittelleitung 12 ist in einem Bereich 12d abgeflacht, der sich am vorderen Ende 10a des Kühlelements 10 befindet. Dort verjüngt sich die Kühlmittelleitung 12 in ihrer Breite zum vorderen Ende 10a hin. Hierdurch wird das Einschieben von Batteriezellen 50 zwischen zwei eng nebeneinander liegenden Kühlelementen 10 ermöglicht.

Das Kühlelement 10 hat eine Länge L, die es erlaubt, mehrere Batteriezellen 50 anzulegen bzw. zwischen zwei eng nebeneinander liegenden Kühlelementen 10 zu positionieren, so dass die Batteriekörper 53 der Batteriezellen 50 die Kühlfläche 11a des Kühlkörpers 11 thermisch kontaktieren, und die Anschlusselemente 51, 52 der Batteriezellen 50 die Seitenfläche 12a der Kühlmittelleitung 12 thermisch kontaktieren.

Das abgeflachte Ende 12d der Kühlmittelleitung 12 kann jedoch ebenso eine andere Form aufweisen, die es ermöglicht, eine oder mehrere Batteriezellen 50 zwischen zwei eng nebeneinander liegenden Kühlelementen 10 einzuschieben.

Im Kühlbetrieb durchströmt das durch die Öffnung 12a eintretende Kühlmittel die Kühlmittelleitung 12 in der Richtung S, wobei S aufgrund der Bauform des Kühlelements 10 den Kühlkörper 11 an seinen Kanten 13a, 13c, 13b umströmt und auf diese Weise Wärme von dem Kühlkörper 11 abführt, der einen Wärmeverteiler bildet.

Das Kühlmittel kühlt nach dem Eintreten in die Kühlmittelleitung 12 direkt die elektrischen Anschlüsse bzw. Battery Tabs 51, 52 der Batteriezelle 50 und entfernt darüber hinaus auch Wärme von dem Kühlkörper 11 bzw. Hitzeverteiler, der an seinen drei Seiten bzw. Kanten vom Kühlmittelstrom umgeben ist.

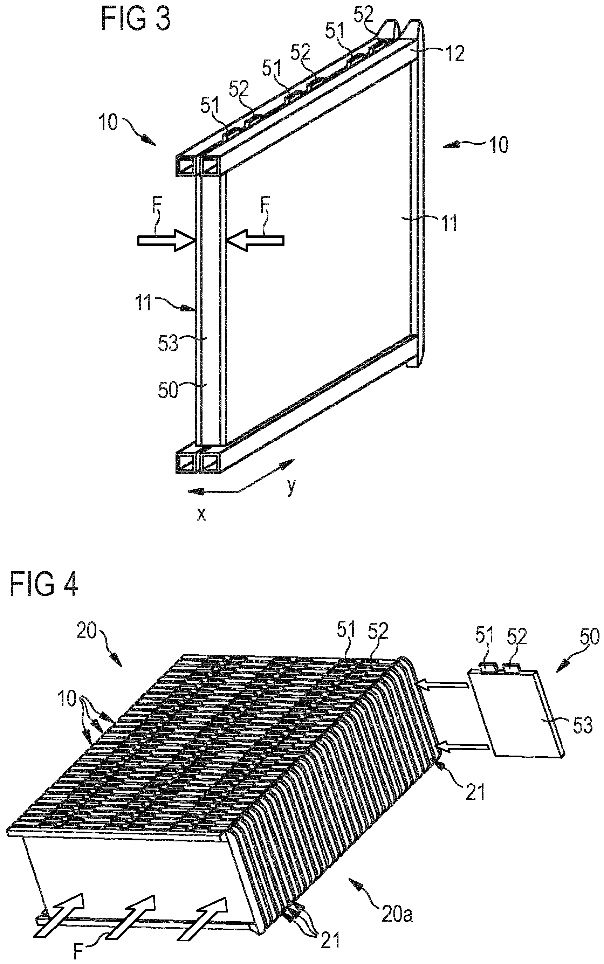

Fig. 3 zeigt zwei Kühlelemente 10, die seitlich nebeneinander angeordnet sind. Die Kühlelemente 10 wurden oben unter Bezugnahme auf Fig. 1 bereits im Detail erläutert. Zwischen den beiden parallel zueinander ausgerichteten Kühlelementen 10 befindet sich eine Reihe von mehreren Batteriezellen 50, wobei ihre Batteriekörper 53 und ihre Anschlusselemente 51, 52 von beiden Seiten durch die Kühlplatten 11 und die Kühlmittelleitungen 12 der Kühlelemente 10 thermisch kontaktiert werden.

Die Reihe von Batterien bzw. Pouch-Zellen oder Batteriezellen 50 ist in Längsrichtung Y der einzelnen Kühlelemente 10 angeordnet und von zwei einzelnen Kühlplatten bzw. Kühlelementen 10 umschlossen. Auf diese Weise bilden sie gemeinsam ein Zellen-Kühl-Paket.

Die beiden Kühlelemente 10 werden zusammengepresst, bzw. gegeneinandergedrückt, wobei gegeneinander gerichtete Kräfte F auf die Kühlplatten 11 ausgeübt werden. Hierdurch wird der thermische Kontakt der Batterie-Anschlusselemente 51, 52 zu den Kühlelementen 10 sichergestellt und ein Anschwellen der Pouch-Zellen bzw. Batteriezellen 50 wird verhindert.

Das Zell-Kühl-Paket hat eine Breite, die sich in Richtung X erstreckt.

Fig. 4 zeigt eine Paketanordnung 20 als ein Beispiel für eine erfindungsgemäße Kühlvorrichtung für Batteriezellen. Dabei sind eine Vielzahl von Kühlelementen 10, wie sie oben im Detail beschrieben sind, parallel zueinander angeordnet, um eine Vielzahl von Batterie- bzw. Pouch-Zellen 50 aufzunehmen.

Hierzu werden jeweils mehrere Batteriezellen 50 nacheinander in eine schlitzförmige Öffnung 21 eingeschoben, die jeweils zwischen zwei aneinandergrenzenden Kühlelementen 10 an der Vorderseite 20a der Paketanordnung 20 ausgebildet ist. Somit bildet jede schlitzförmige Öffnung 21 einen Einschub, um eine Vielzahl von Batteriezellen 50 hintereinander bzw. als Reihe angeordnet zwischen zwei nebeneinander liegenden Kühlelementen 10 aufzunehmen.

Aufgrund der Vielzahl von nebeneinander liegenden Kühlelementen 10 können eine Vielzahl von Reihen einzelner Batteriezellen 50 parallel zueinander im Inneren der Paketanordnung 20 aufgenommen werden.

Nach dem Zusammenfügen der Anordnung bzw. dem Einfügen der Batteriezellen 50 wird das nun gebildete Batteriepaket mithilfe einer in der Figur nicht dargestellten Klammervorrichtung geklammert, um von beiden Seiten der Paketanordnung 20 eine Kraft F auf diese auszuüben und somit das gesamte Batteriepaket zusammenzupressen. An der Oberseite der Paketanordnung 20 ragen die einzelnen Anschlusselemente 51, 52 der enthaltenen Batterien bzw. Zellen 50 heraus, um diese miteinander zu verschalten.

Die Kühlmittelleitung 12 steht in thermischem Kontakt mit den elektrischen Anschlusselementen 51, 52 der Batteriezellen 50, jedoch ist sie durch eine elektrische Barriere, beispielsweise in Form einer dünnen elektrischen Isolierung oder Isolierschicht, elektrisch isoliert. Aufgrund der geringen elektrischen Spannung der Batterien kann diese Barriere sehr dünn ausgebildet sein. Dies ist abhängig von der Spannungs- bzw. Durchschlagsfestigkeit des verwendeten Materials.

Nachdem das Batteriepaket zusammengefügt wurde, werden die einzelnen Kühlplatten bzw. Kühlelemente 10 gegeneinandergedrückt. Dadurch wird Druck auf die Pouch-Zellen ausgeübt, was ein Anschwellen der Zellen verhindert und gleichzeitig einen besseren thermischen Kontakt zwischen den Tabs bzw. Anschlusselementen 51, 52 der Zellen 50 und den Kühlmittelleitungen 12 bewirkt.

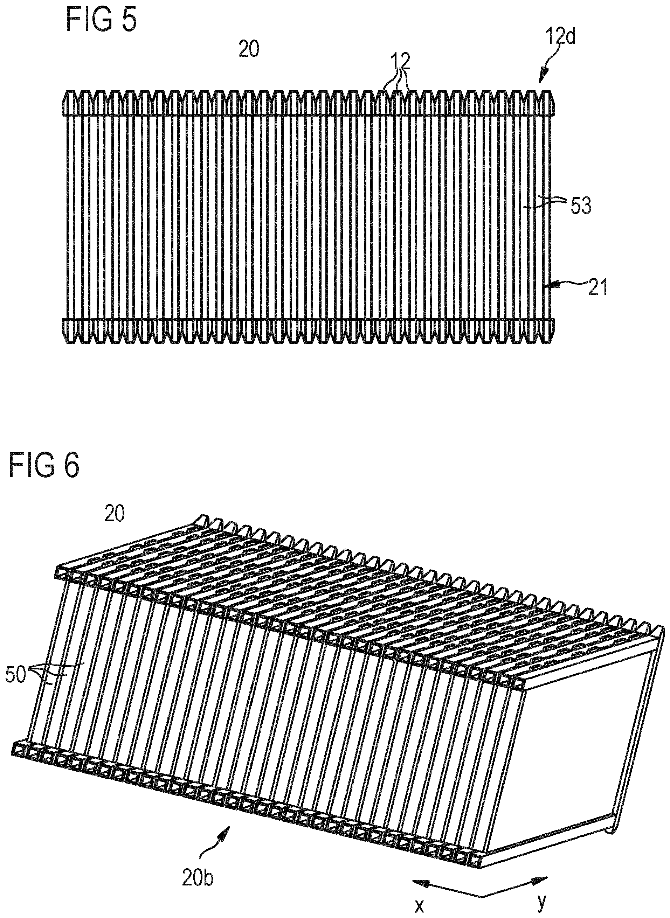

Die Fig. 5 zeigt eine Vorderansicht der Paketanordnung 20, wie sie oben unter Bezugnahme auf die Fig. 4 erläutert ist. Die zum vorderen Ende hin abgeflachten Kühlmittelleitungen 12 mit ihren abgeflachten Endbereichen 12d erleichtern den Einschub der Batteriezellen 50 in die schlitzförmigen Öffnungen 21 an der Vorderseite 20a der Paketanordnung 20.

In Fig. 6 ist die Paketanordnung 20 mit den darin enthaltenen Pouch-Zellen 50 in einer Ansicht auf ihre Rückseite 20b gezeigt. Die Anordnung erstreckt sich in ihrer Längsrichtung (y-Richtung) und in Richtung ihrer Breite (x-Richtung). In x-Richtung sind eine Vielzahl von Reihen von Pouch-Zellen 50 seitlich nebeneinander und parallel zueinander angeordnet. Die einzelnen Reihen werden dabei durch Pouch-Zellen gebildet, die in y-Richtung nacheinander aufgereiht sind. Somit wird eine Batteriezellen-Kühl-Reihe gebildet.

Je nach Anforderung kann die Abmessung von x, das heißt die Breite der Anordnung, variabel gestaltet werden. Die Abmessung von y richtet sich nach der Anzahl und der Geometrie der in jeder Reihe befindlichen Zellen.

Die weiteren Details und Merkmale der einzelnen Elemente der Paketanordnung 20 wurden oben beschrieben.

Die hier beschriebene Paketanordnung 20 bildet eine Vorrichtung zum Kühlen von Batteriezellen. Sie wird mittels Added Layer Manufacturing (ALM), das heißt mittels additiver Fertigung hergestellt. Auf diese Weise wird durch ALM ein integraler Kühlstapel geschaffen.

Zur Bereitstellung und Lieferung des Kühlmittels in die Vorrichtung kann ein übliches System verwendet werden, das in den Zeichnungen nicht dargestellt ist. Bevorzugt sind die Kühlleitungen flexibel, um nach dem Zusammenbau des Zellstapels komprimiert werden zu können.

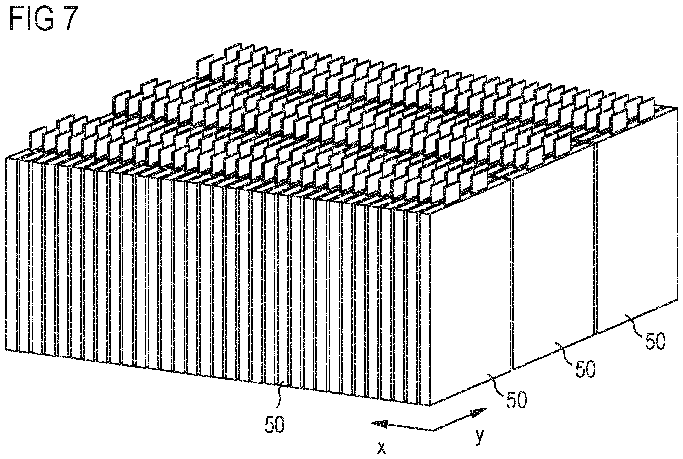

Fig. 7 zeigt eine Anordnung von Batteriezellen 50, wie sie in der oben beschriebenen Paketanordnung 20 nach dessen Befüllung mit den Batteriezellen 50 enthalten ist. Die Dimensionen bzw. Abmessungen in x-Richtung und y-Richtung sind optional, das heißt sie können je nach Anforderung an das Paket gewählt werden.

Die Erfindung erlaubt das Stapeln einer Vielzahl von Batteriezellen und insbesondere Pouch-Zellen mit effektiver Kühlung der elektrischen Anschlüsse bzw. Tabs, Kompression der Zellen und zusätzlicher Kühlung der Zelloberflächen.

Besonders vorteilhaft sind die gute thermische Leitung bzw. Wärmeleitung durch die Elektroden bzw. Anschlüsse oder Tabs in die jeweilige Pouch-Zelle, sowie die Oberflächenkühlung durch die Oberfläche der Pouch-Zelle. Dadurch wird ein geringerer Temperaturgradient durch die Hauptoberfläche der Zelle erreicht, was zu einer Erhöhung der Lebensdauer und der Leistungsfähigkeit der Zelle und einer geringeren Zustandsverschlechterung der Zelle aufgrund von Hitze erfolgt. Darüber hinaus wird durch die Kompression der Pouch-Zellen das Anschwellen der Zellen verhindert.

### Bezugszeichenliste:

- 10: Kühlelement
- 10a: vorderes Ende
- 10b: Rückseite
- 11: Kühlkörper / -platten
- 11a: Hauptflächen bzw. Kühlflächen
- 12: Kühlmittelleitung
- 12a, 12b: Öffnung
- 12c: Seitenflächen
- 12d: abgeflachter Bereich
- 13a, 13b,13c: obere, untere, vordere Kante
- 20: Paketanordnung
- 20a: Vorderseite
- 20b: Rückseite
- 21: Öffnung
- 50: Batteriezelle
- 51, 52: elektrische Anschlusselemente
- 53: Batteriekörper
- 53a: Hauptfläche

- F: Kraft
- L: Länge
- S: Fließrichtung
- X: Richtung der Breite
- Y: Längsrichtung

## Patentansprüche

1. Kühlelement (10) für Batteriezellen, umfassend
einen Kühlkörper (11) zur thermischen Kontaktierung einer Hauptfläche (53a) einer Batteriezelle (50), um Wärme von der Batteriezelle (50) aufzunehmen, und
eine Kühlmittelleitung (12) für ein Kühlmittel, um Wärme von dem Kühlkörper (11) aufzunehmen und abzuleiten,
wobei die Kühlmittelleitung (12) derart gestaltet ist, dass sie zum Kühlen der Batteriezelle (50) deren elektrische Anschlusselemente (51, 52) thermisch kontaktiert, und
wobei das Kühlelement (10) derart gestaltet ist, dass sich durch Anfügen eines weiteren Kühlelements (10) eine Aufnahme für die Batteriezelle (50) bildet, um diese von zwei Seiten an ihren Hauptflächen (11a) und ihren elektrischen Anschlusselementen (51, 52) thermisch zu kontaktieren.

2. Kühlelement (10) nach Anspruch 1, **dadurch gekennzeichnet, dass** der Kühlkörper (11)
2.1. als Kühlplatte ausgestaltet ist; und/oder
2.2. eine rechteckige Form aufweist; und/oder
2.3. an beiden Seiten jeweils eine Kühlfläche (11a) zur thermischen Kontaktierung der Hauptflächen (53a) angrenzender Batteriezellen (50) umfasst;

3. Kühlelement (10) nach Anspruch 1 oder 2, **dadurch gekennzeichnet, dass** die Kühlmittelleitung (12)
3.1. zumindest in einem Abschnitt an einem Rand (13a, 13b, 13c) des Kühlkörpers (11) angeordnet ist; und/oder
3.2. den Kühlkörper (11) oder einen Bereich des Kühlkörpers (11) von mindestens drei Seiten umgibt; und/oder
3.3. Seitenflächen (12d) zur thermischen Kontaktierung der elektrischen Anschlusselemente (51, 52) jeweils angrenzender Batteriezellen (50) umfasst; und/oder
3.4. In einem Bereich (12d) abgeflacht ist, um das Einschieben von Batteriezellen (50) zwischen zwei nebeneinander angeordneten Kühlelementen (10) zu ermöglichen.

4. Kühlelement (10) nach einem der vorhergehenden Ansprüche, **dadurch gekennzeichnet, dass** es mittels additiver Fertigung hergestellt ist.

5. Vorrichtung zum Kühlen von Batteriezellen (50), **gekennzeichnet durch** mindestens zwei Kühlelemente (10) nach einem der Ansprüche 1 bis 4, wobei die Kühlelemente (10) seitlich nebeneinander angeordnet sind, um Batteriezellen (50) zwischen sich aufzunehmen und von beiden Seiten an deren Hauptflächen (53a) und elektrischen Anschlusselementen (51, 52) flächig zu kontaktieren.

6. Vorrichtung nach Anspruch 5, **dadurch gekennzeichnet, dass** die Kühlmittelleitungen derart angeordnet sind, dass sie die Anschlusselemente (51, 52) aufgenommener Batteriezellen (50) flächig an zwei sich gegenüber liegenden Seiten thermisch kontaktieren.

7. Vorrichtung nach Anspruch 5 oder 6, **dadurch gekennzeichnet, dass** die Kühlkörper (11) derart angeordnet sind, dass sie die Hauptflächen (53a) aufzunehmender Batteriezellen (50) flächig an zwei sich gegenüber liegenden Seiten thermisch kontaktieren.

8. Vorrichtung nach einem der Ansprüche 5 bis 7, **dadurch gekennzeichnet, dass**
8.1. eine Vielzahl von Kühlelementen (10) parallel zueinander angeordnet sind, um eine Vielzahl von Batteriezellen (50) zwischen den Kühlelementen (10) aufzunehmen; und/oder
8.2. die Kühlelemente derart gestaltet sind, dass zwischen jeweils zwei Kühlelementen (10) mehrere Batteriezellen (50) nacheinander angeordnet werden können.

9. Vorrichtung nach einem der Ansprüche 5 bis 8, **gekennzeichnet durch** eine Einrichtung zum Aneinanderdrücken der Kühlelemente (10).

10. Vorrichtung nach einem der Ansprüche 5 bis 9, **gekennzeichnet durch** eine Einrichtung zum Pumpen eines Kühlmittels durch die Kühlmittelleitungen.

11. Batteriepack mit einer Vielzahl von Batteriezellen (50), **dadurch gekennzeichnet, dass** die Batteriezellen (50) in einer Vorrichtung nach einem der Ansprüche 5 bis 10 angeordnet sind.

12. Verfahren zum Kühlen von Batteriezellen (50), bei dem ein Kühlkörper (11) an einer Hauptfläche (53) einer Batteriezelle (50) angeordnet wird, um die Hauptfläche (53) zu kühlen, und mit Hilfe eines Kühlmittels Wärme von dem Kühlkörper (11) aufgenommen und abgeführt wird, wobei das Kühlmittel in einer Kühlmittelleitung (12) geführt wird, die elektrische Anschlusselemente (51, 52) der Batteriezelle (50) thermisch kontaktiert und Wärme von den Anschlusselementen (51, 52) aufnimmt und mit Hilfe des Kühlmittels abführt.

13. Verfahren nach Anspruch 12, **dadurch gekennzeichnet, dass** eine oder mehrere Batteriezellen (50) zwischen jeweils zwei Kühlkörpern (11) angeordnet sind, welche der jeweiligen Batteriezelle (50) von beiden Seiten durch thermischen Kontakt Wärme entziehen, wobei den elektrischen Anschlusselementen (51, 52) der Batteriezelle (50) von beiden Seiten durch thermischen Kontakt mit der Kühlmittelleitung (12) Wärme entzogen wird,

14. Verfahren nach Anspruch 13, **dadurch gekennzeichnet, dass** die Kühlkörper (11) gegen einander gedrückt werden, um Druck auf die dazwischen liegenden Batteriezellen (50) auszuüben.

15. Verfahren nach einem der Ansprüche 12 bis 14, **dadurch gekennzeichnet, dass** es mit einem Kühlelement nach einem der Ansprüche 1 bis 4 und/oder mit einer Vorrichtung nach einem der Ansprüche 5 bis 10 und/oder mit einem Batteriepack nach Anspruch 11 durchgeführt wird.
